# EUROPÄISCHE PATENTANMELDUNG

(11) **EP 4 838 106 A1**
(43) Veröffentlichungstag der Anmeldung: **11.11.2026**
(21) Anmeldenummer: 25174931.3
(22) Anmeldetag: 08.05.2025
(51) Int. Cl.: F16B 13/14

(54) **VERFÜLLSCHEIBENANORDNUNG ZUM FÜLLEN EINES RINGSPALTS ZWISCHEN EINEM ANKER UND EINER ANKERBOHRUNG**

(71) Anmelder: Hilti Aktiengesellschaft, 9494 Schaan (LI)
(72) Erfinder: Ayrle, Thomas, 86853 Langerringen (DE); Helbig, Philipp, 89522 Heidenheim (DE)
(74) Vertreter: Hilti Aktiengesellschaft Corporate Intellectual Property

(57) **Zusammenfassung**

Die Erfindung betrifft eine Verfüllscheibenanordnung zum Füllen eines Ringspalts (4) zwischen einem mechanischen oder chemischen Anker (1) und einem einen plattenförmigen Teil (19) aufweisenden Anbauteil (5), umfassend eine Verfüllscheibe (8; 8') mit einer Durchgangsöffnung (13) zur Aufnahme des über eine Mutter (6) schraubverbindbaren Ankers (1), wobei der Ringspalt (4) mit einem Verfüllkanal (14) der Verfüllscheibe (8; 8') in Verbindung steht, in den über einen Einfüllkanal (12) und dessen von außen her zugängliche oberseitige Einfüllöffnung (9) ein Verfüllmaterial einpressbar ist, wobei die Verfüllscheibe (8; 8') eine rechteckförmige Grundkontur mit insbesondere außermittig angeordneter Durchgangsöffnung (13) aufweist, wobei die Verfüllscheibe (8; 8') zur Übertragung der durch die Mutter (6) aufgebrachten Anpresskraft eine Metallkomponente aufweist, die mit einer Kunststoffkomponente zur zumindest teilweise Ausbildung der Kanalstrukturen kombiniert ist.

## Beschreibung

Die vorliegende Erfindung betrifft eine Verfüllscheibenanordnung zum Füllen eines Ringspalts zwischen einem mechanischen oder chemischen Anker und einem einen plattenförmigen Teil aufweisenden Anbauteil, umfassend eine Verfüllscheibe mit einer Durchgangsöffnung zur Aufnahme des über eine Mutter schraubverbindbaren Ankers, wobei der Ringspalt mit einem beispielsweise unterseitigen Verfüllkanal der Verfüllscheibe in Verbindung steht, in den über einen Einfüllkanal und dessen von außen her zugängliche oberseitige Einfüllöffnung ein Verfüllmaterial in den Ringspalt einpressbar ist.

Das Einsatzgebiet der Erfindung erstreckt sich vornehmlich auf die Bautechnik, insbesondere auf die Verwendung stangenförmiger Anker zur Befestigung von Anbauteilen an einen mineralischen Ankergrund, wie Beton. Beispielsweise weisen Stützen oder Querträger aus Baustahl eine Grundplatte auf, welche gewöhnlich mehrere Bohrungen zur Aufnahme von Gewindeankern für die Herstellung von Schraubverbindungen verfügt, die als mechanische oder chemische Anker ausgebildet einerseits eine feste Verbindung zum Ankergrund herstellen und andererseits einen Gewindeabschnitt zur Herstellung der besagten lösbaren Schraubverbindung aufweisen.

Die vorstehend erwähnten chemische Anker werden mit einer aushärtbaren Masse über ein Bohrloch im Ankergrund verankert. Die aushärtbare Masse ist beispielsweise ein Kunstharzmörtel. Bei mechanischen Ankern wird der Ankerschaft zur Befestigung im Bohrloch des Ankergrunds dagegen aufgespreizt und kann beispielsweise als Hülsen- oder Bolzenanker ausgebildet sein. Es existieren auch Kombinationen beider Ankertypen, auf welche die vorliegende Erfindung ebenfalls anwendbar ist.

Bei einer Schraubbefestigung eines hier interessierenden Ankers besteht zunächst zwischen dem Anker und einem insbesondere plattenförmigen Teil des Anbauteils ein Ringspalt, welcher sich nach Herstellung der Schraubverbindung über die hier interessierende Verfüllscheibenanordnung mit einem Verfüllmaterial, beispielsweise einem Epoxidharzmörtel, verfüllen lässt, um den besagten Ringspalt zu schließen. Hierdurch wird sichergestellt, dass bei Verwendung mehrerer Anker zur Befestigung eines Anbauteils alle Anker bei Querbelastung gleich beansprucht werden, um die Stabilität der Schraubverbindung zu maximieren. Darüber hinaus kann hierdurch eine gewünschte Abdichtwirkung erzielt werden.

### Stand der Technik

Aus der WO 2016/169633 A1 geht eine Verfüllscheibenanordnung zum Füllen eines Ringspalts zwischen einem Anker und einer Ankerbohrung hervor, dessen Verfüllscheibe in einer ersten Ausführungsform einen von radial außen nach innen durchgehenden Spalt aufweist, der in eine Durchgangsöffnung der Verfüllscheibe für den Durchtritt des Ankers mündet und dessen äußeres Ende die durch den Spalt mit der Durchgangsöffnung kommunizierende Einfüllöffnung für das Verfüllmaterial bildet. In einer weiteren Ausführungsform weist die Verfüllscheibe eine schräg stehende Einfüllöffnung im Bereich des Außenumfangs auf. Eine andere Ausführungsform beschreibt einen Einfüllkanal mit Einfüllöffnung, welche achsparallel gegenüber der Durchgangsöffnung verläuft. Die Einfüllöffnung befindet sich dabei auf der Oberseite der Verfüllscheibe und nicht - wie bei den beiden vorstehenden Ausführungsformen - am Umfang derselben. Prinzipiell erweisen sich derartig angeordnete Einfüllöffnungen in der Praxis als optimal zugänglich zum Ansetzen eines Einfüllstutzens an die Einfüllöffnung.

Die DE 10 2016 107 848 A1 beschreibt ebenfalls eine gattungsgemäße Verfüllscheibenanordnung, bei der die Verfüllscheibe aus Kunststoff besteht und zwischen einer auf den Anker aufgeschraubten Mutter und einem Anbauteil angeordnet ist. Eine Durchgangsöffnung der Verfüllscheibe wird über eine achsparallel und an der Oberseite der Verfüllscheibe angeordnete Einfüllöffnung mit Verfüllmaterial befüllt, so dass der Ringspalt zwischen dem Anker und der Ankerbohrung ausgefüllt wird. Dabei erstreckt sich die ausgehärtete Masse auch über die Dicke der aus Kunststoff bestehenden Verfüllscheibe, welche diese entlastet. Die Lastübertragung über das Kunststoffteil und dem Verfüllmaterial ist gegenüber der Lastübertragung über ein Metallmaterial entsprechend begrenzt.

Es ist die Aufgabe der vorliegenden Erfindung, eine Verfüllscheibenanordnung der gattungsgemäßen Art dahingehend weiter zu verbessern, dass eine hohe Lastübertragung bei optimal zugänglicher Einfüllöffnung für Verfüllmaterial gewährleistet ist, wobei die Verfüllscheibe möglichst kleinbauend, materialsparend und funktional gestaltet sein soll.

### Offenbarung der Erfindung

Die Aufgabe wird ausgehend von einer Verfüllscheibenanordnung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine Verfüllscheibe eine rechteckförmige Grundkontur mit insbesondere außermittig angeordneter Durchgangsöffnung aufweist, wobei die Verfüllscheibe zur hauptsächlichen Übertragung der durch die Mutter aufgebrachten Anpresskraft eine Metallkomponente aufweist, die mit einer Kunststoffkomponente zur zumindest teilweisen Ausbildung der Kanalstrukturen kombiniert ist.

Der Vorteil der erfindungsgemäßen Lösung liegt im Hinblick auf die spezielle Grundkontur der Verfüllscheibe insbesondere darin, dass sich hierdurch verschiedene Einbausituationen realisieren lassen, die sich besonders auch an eine normalerweise ebenfalls rechteckförmige Grundplattenkontur bzw. einen plattenförmigen Teil eines Anbauteils sowohl funktionell als auch geometrisch-optisch anpassen lassen. Dabei kann entweder einer zugänglichen Lage der Einfüllöffnung oder einer Konturfolge des Anbauteils der Vorzug gegeben werden. Unter rechteckiger Grundkontur soll im Rahmen der vorliegenden Anmeldung eine rechteckförmige Hüllgeometrie mit zwei einander gegenüberliegenden kurzen Seiten sowie zwei einander gegenüberliegenden demgegenüber längeren Seiten verstanden werden, wobei die Eckbereiche durchaus gefast oder abgerundet sein können.

Die erfindungsgemäße Verfüllscheibe stellt ein hybrides Bauteil dar, wobei die Metallkomponente hauptsächlich eine druckkraftübertragende Funktion ausführt, wohingegen die Kunststoffkomponente eine kanalstrukturformende Funktion ausführt. Denn mit Kunststoff lassen sich kompliziertere Kanalführungen mit Abwinklungen, Übergängen und Richtungswechseln fertigungstechnisch einfacher ausbilden als mit Metall. Ersterenfalls kann eine solche Kunststoffkomponente als Spritzgießteil hergestellt werden; letzterenfalls wäre eine aufwendigere spanende Bearbeitung in Kombination mit einer umformtechnischen Bearbeitung erforderlich, wie beispielsweise Prägen. Darüber hinaus kann es auch vorgesehen sein, dass die Kunststoffkomponente mit additiven Fertigungsverfahren hergestellt wird.

Gemäß einer ersten bevorzugten Ausführungsform der Erfindung ist die Metallkomponente eine hohlzylindrische Metallhülse mit Wandöffnung für den Einfüllkanal, welche in der im Übrigen aus der Kunststoffkomponente bestehenden Verfüllscheibe angeordnet ist. Hierdurch wird Metallmaterial lediglich für die Übertragung der von der Mutter aufgebrachten Druckkraft auf das Anbauteil verwendet, wohingegen der überwiegende Materialanteil aus Kunststoff hergestellt werden kann, welcher demgegenüber eine bessere Formgebung gestattet. So kann gegenüber einer nichthybriden Ausführung bis zu 80% an Metallmaterial eingespart werden.

Die hohlzylindrische Metallhülse kann in die Kunststoffkomponente der Verfüllscheibe eingepresst und/oder eingeklebt werden. Daneben ist es auch denkbar, dass eine Metallhülse durch das Material der Kunststoffkomponente im Zuge einer spritzgießtechnischen Herstellung umspritzt wird. Ein verliersicherer Halt der hohlzylindrischen Metallhülse innerhalb des Kunststoffs der übrigen Verfüllscheibe unter Gewährleistung eines dichten Übergangs des Einfüllkanals in die Wandöffnung der Metallhülse ist für den erfindungsgegenständlichen Einsatzzweck hinreichend.

Gemäß einer zweiten Ausführungsform der Erfindung wird vorgeschlagen, dass die Metallkomponente durch einen aus einem Metallmaterial bestehenden Grundkörper gebildet ist, welcher einen Kunststoffeinsatz zur Ausbildung zumindest des von der Einfüllöffnung ausgehenden Einfüllkanals als Bestandteil der Kanalführung aufweist. Der spezielle Vorteil dieser Ausführungsform liegt nicht in der Einsparung von Metallmaterial, sondern in einer fertigungstechnischen Vereinfachung für die Ausbildung funktionsgerechter interner Kanalstrukturen. Für den Kunststoffeinsatz kann ein relativ weiches Kunststoffmaterial oder ein Elastomermaterial gewählt werden, um zusätzlich einen zuverlässigen Dichtkontakt mit dem Einfüllstutzen für das Verfüllmaterial zu gewährleisten. Der Kunststoffeinsatz kann in eine korrespondierende Ausnehmung des Grundkörpers eingepresst und/oder eingeklebt werden.

Gemäß einer weiteren die erfindungsgemäße Lösung in beiden Ausführungsformen verbessernden Maßnahme wird vorgeschlagen, dass die Achse des Einfüllkanals für das Verfüllmaterial gegenüber der Achse der Durchgangsöffnung unter einem spitzen Winkel verläuft. Eine Schrägstellung zwischen vorzugsweise 20° bis 60°, insbesondere zwischen 35° und 55°, ganz vorzugsweise ca. 45°, gegenüber der Achse der Durchgangsöffnung erleichtert die Zugänglichkeit für den hieran anzudockenden Einfüllstutzen einer Einfüllspritze oder dergleichen. Dabei kann der Einfüllkanal leicht konisch ausgebildet sein, um die Dichtwirkung während des Einfüllvorgangs durch Einpressen des Einfüllstutzens in den Einfüllkanal zu erhöhen.

Während das Kunststoffmaterial der Kunststoffkomponente, wie bereits vorstehend erwähnt, vorzugsweise aus einem weichen Kunststoff bis hin zu einem harten Elastomermaterial bestehen kann, wie beispielsweise Polyethylen oder Polypropylen, besteht das Metallmaterial der Metallkomponente vorzugsweise aus einem verzinkten und/oder rostfreien Stahlmaterial, wie dieses bei ähnlichen Anwendungsfällen in der Bautechnik zum Einsatz kommt. Dies gewährleistet die hinreichende Druck- und Verschleißfestigkeit.

Gemäß einer anderen die Erfindung weiter verbessernden Maßnahme wird vorgeschlagen, dass der Abstand A zwischen der Durchgangsöffnung für den Anker und einer oberen, schmalen Seitenkante der Verfüllscheibe größer ist als die Abstände zu den übrigen Seitenkanten, um im Bereich des Abstandes A die oberseitige Einfüllöffnung des Verfüllkanals anzuordnen. Diese sollte vorzugsweise möglichst nah an der Durchgangsöffnung unter Berücksichtigung des Durchmessers einer weiteren optionalen Unterlegscheibe sowie der Außenmaße der Mutter sein.

Gemäß einer weiteren die Erfindung verbessernden Maßnahme wird vorgeschlagen, dass der zwischen Einfüllkanal und Ringspalt verlaufende Verfüllkanal der Verfüllscheibe unterseitig nutartig ausgebildet ist und vorzugsweise mehrteilig ausgeführt ist, wobei die einseitigen Enden mehrerer Verfüllkanäle in den Einfüllkanal einmünden, wohingegen die gegenüberliegenden Enden des Verfüllkanals in den Ringspalt einmünden. Hierdurch kann sichergestellt werden, dass selbst bei einer Verstopfung eines Kanalzugs noch mindestens ein anderer Kanalzug als Bypass zur Zuführung des Verfüllmaterials in den Ringspalt zur Verfügung steht. Die Querschnitte der vorzugsweise nutförmig ausgebildeten Kanalzüge addieren sich, so dass im Normalfall keine Drosselstelle für den Materialdurchfluss entsteht.

Als weitere die Erfindung verbessernde Maßnahme wird vorgeschlagen, dass die Durchgangsöffnung der Verfüllscheibe an der der Mutter zugewandten Seite eine radial verlaufende Kontrollbohrung bzw. einen Kontrollkanal zur optischen Anzeige des Füllstands des Verfüllmaterials aufweist. Eine solche Kontrollbohrung besitzt einen so minimalen Querschnitt, dass ein in den Ringspalt eingepresstes Verfüllmaterial schließlich hieraus austritt, um dem Nutzer anzuzeigen, dass der Ringspalt vollständig mit der Verfüllmasse gefüllt ist. Da diese Information auch nach erfolgter Montage erhalten bleibt, kann diese zu Prüfzwecken einer fachgerechten Herstellung der Ankerverbindung genutzt und dokumentiert werden.

Bei einer konstruktiv einfachen Weiterbildung der Erfindung ist vorgesehen, dass die Kontrollbohrung an einer dem plattenförmigen Teil des Anbauteils zugewandten Seite insbesondere dem Einfüllkanal gegenüberliegend angeordnet ist.

Ferner kann auf einer der Mutter zugewandten Seite der Verfüllscheibe eine Kugelscheibe angeordnet sein, die an einer der Mutter abgewandten Seite mit einer konischen oder sphärischen Oberfläche ausgeführt ist, die zum Zusammenwirken mit einer korrespondierenden konischen oder sphärischen Fase der Verfüllscheibe zur Zentrierung der Verfüllscheibe gegenüber der Achse des Ankers ausgeführt ist.

Bei einer konstruktiv einfachen Weiterbildung der Erfindung ist vorgesehen, dass eine Kontrollbohrung bzw. ein Kontrollkanal zur optischen Anzeige des Füllstandes des Verfüllmaterials im Bereich der konischen oder sphärischen Fase angeordnet ist.

### Detailbeschreibung anhand Zeichnung

Weitere die Erfindung verbessernde Maßnahmen werden nachstehend gemeinsam mit der Beschreibung bevorzugter Ausführungsformen der Erfindung näher dargestellt. Es zeigt:
- Fig. 1: eine perspektivische Ansicht einer Ankerverbindung zwischen einem Anbauteil und einem Ankergrund unter Verwendung von vier Ankern mit je zugeordneter Verfüllscheibenanordnung,
- Fig. 2: die Ankerverbindung von Fig. 1 in Draufsicht,
- Fig. 3: einen Längsschnitt der Ankerverbindung gemäß Fig. 1 und 2 unter Verwendung einer Verfüllscheibe gemäß einer ersten Ausführungsform, und
- Fig. 4: einen Längsschnitt der Ankerverbindung gemäß Fig. 1 und 2 unter Verwendung einer Verfüllscheibe gemäß einer zweiten Ausführungsform.

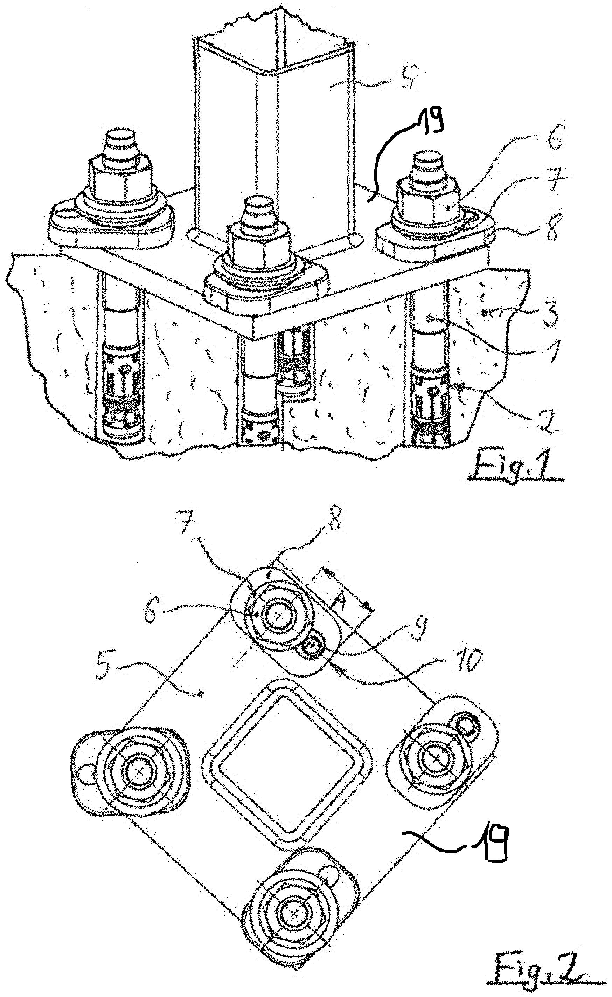

Gemäß Fig. 1 sind mehrere Anker 1 (exemplarisch) in einer zugeordneten Ankerbohrung 2 eines Ankergrunds 3 - hier aus Beton - befestigt.

Mit einem distalen Gewindeabschnitt des Ankers 1 ist ein Anbauteil 5 in Form einer - hier nicht weiter dargestellten - Stütze über eine Grundplatte bzw. einen plattenförmigen Teil 19 am Ankergrund 3 befestigt. Hierfür ist eine Mutter 6 auf den Gewindeabschnitt des Ankers 1 aufgeschraubt, wobei diese vorliegend auf eine optional vorzusehende Unterlegscheibe 7 einwirkt, die wiederum über eine Kugelscheibe 20 auf eine nachfolgende Verfüllscheibe 8 einwirkt, welche an der Oberfläche des Anbauteils 5 zur Anlage kommt. Bei der Unterlegscheibe 7 handelt es sich bevorzugt um eine Kugelscheibe nach DIN 6319.

Gemäß Fig. 2 verfügt die Verfüllscheibe 8 über eine von der Oberseite her zugängliche Einfüllöffnung 9 zur Einbringung von Verfüllmaterial. Die Verfüllscheibe 8 weist eine rechteckförmige Grundkontur mit abgerundeten Ecken auf, wobei die Durchgangsöffnung für den Anker 1 hier außermittig angeordnet ist. Außerdem ist der Abstand A zwischen derselben und einer oberen, schmalen Seitenkante 10 größer als die Abstände zu den übrigen Seitenkanten, um im Bereich dieses Abstandes A die oberseitige Einfüllöffnung 9 anzuordnen.

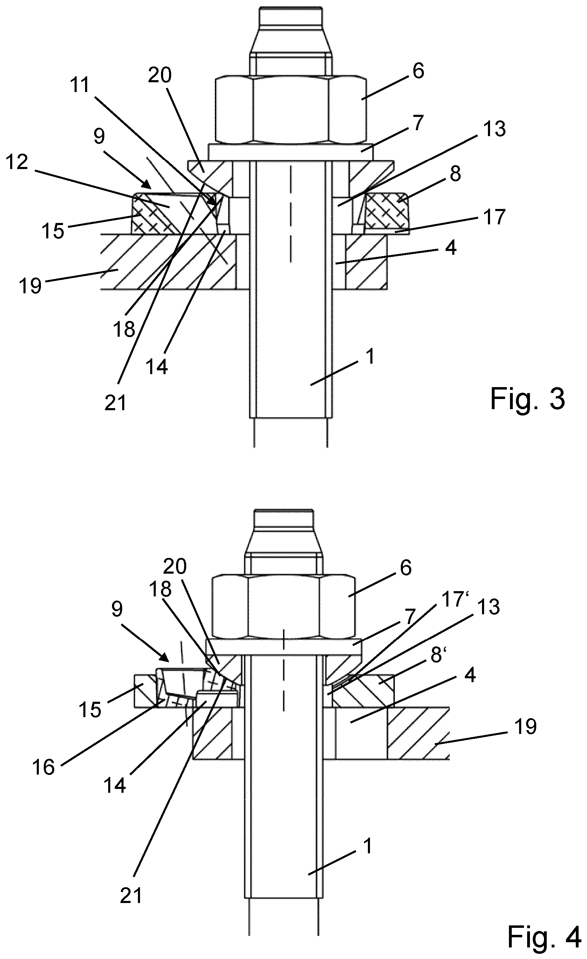

Bei der in Fig. 3 rechts illustrierten ersten Ausführungsform weist die Verfüllscheibe 8 als Metallkomponente eine hohlzylindrische Metallhülse 11 aus vorzugsweise nicht rostendem Stahl auf, die über eine Wandöffnung mit einem Einfüllkanal 12 korrespondiert. Im Übrigen ist die Verfüllscheibe 8 als Kunststoffkomponente ausgebildet.

Wie erkennbar, verläuft die Achse des Einfüllkanals 12 gegenüber der Achse der Durchgangsbohrung 13 der Verfüllscheibe 8 unter einem spitzen Winkel, was die Zugänglichkeit eines Einfüllstutzens für das Verfüllmaterial erleichtert. An dem insoweit schrägen Einfüllkanal 12 schließt sich ein unterseitig der Verfüllscheibe 8 angeordneter nutförmiger Verfüllkanal 14 an, der die Verbindung zum zu verfüllenden Ringspalt 4 herstellt.

Ferner ist die Durchgangsöffnung 11 der Verfüllscheibe 8 an einer dem Anbauteil 5 zugewandten Seite mit einer radial verlaufenden Kontrollbohrung 17 verbunden, worüber Verfüllmaterial beim Einpressen austreten kann, um eine optische Kontrolle des Füllstandes zu gewährleisten.

Hinsichtlich der in Fig. 4 illustrierten zweiten Ausführungsform besteht die Metallkomponente der Verfüllscheibe 8' aus einem metallenen Grundkörper 15, in welchen ein Kunststoffeinsatz 16 zur Ausbildung der Einfüllöffnung 9 mit Einfüllkanal 12 aufweist. Der kanalführende Kunststoffeinsatz 16 ist in den Grundkörper 15 der Verfüllscheibe 8' eingepresst.

Außerdem sei darauf hingewiesen, dass die Durchgangsöffnung der Verfüllscheibe 8' an der der Mutter 6 zugewandten Seite mit einer konischen oder sphärischen Fase 18 versehen ist, die mit einer korrespondierend hierzu geformten Unterseite 21 einer hieran zur Anlage kommenden sphärischen Kugelscheibe 20 zusammenwirkt, um die Verfüllscheibe 8' gegenüber der Achse des Ankers 1 zu zentrieren. Im Bereich der Fase 18 kann eine Kontrollbohrung bzw. ein Kontrollkanal 17' zur optischen Anzeige des Füllstandes des Verfüllmaterials angeordnet sein.

Die Erfindung ist nicht beschränkt auf die beiden vorstehend beschriebenen bevorzugten Ausführungsformen. Es sind vielmehr auch Abwandlungen hiervon denkbar, die vom Schutzbereich der nachfolgenden Ansprüche mit abgedeckt sind. So ist es beispielsweise auch möglich, dass die erfindungsgemäße Verfüllscheibenanordnung im Zusammenhang mit anderen hochbelasteten Schraubbefestigungen, beispielsweise Querträgerkonstruktionen oder dergleichen, zum Einsatz kommt.

### Bezugszeichenliste

- 1: Anker
- 2: Ankerbohrung
- 3: Ankergrund
- 4: Ringspalt
- 5: Anbauteil
- 6: Mutter
- 7: Unterlegscheibe
- 8: Verfüllscheibe
- 9: Einfüllöffnung
- 10: Seitenkante
- 11: Metallhülse
- 12: Einfüllkanal
- 13: Durchgangsöffnung
- 14: Verfüllkanal
- 15: Grundkörper
- 16: Kunststoffeinsatz
- 17: Kontrollbohrung
- 18: Fase
- 19: plattenförmiger Teil des Anbauteils
- 20: Kugelscheibe
- 21: Oberfläche der Kugelscheibe

- A: Abstand

## Patentansprüche

1. Verfüllscheibenanordnung zum Füllen eines Ringspalts (4) zwischen einem mechanischen oder chemischen Anker (1) und einem einen plattenförmigen Teil (19) aufweisenden Anbauteil (5), umfassend eine Verfüllscheibe (8; 8') mit einer Durchgangsöffnung (13) zur Aufnahme des über eine Mutter (6) schraubverbindbaren Ankers (1), wobei der Ringspalt (4) mit einem Verfüllkanal (14) der Verfüllscheibe (8; 8') in Verbindung steht, in den über einen Einfüllkanal (12) und dessen von außen her zugängliche oberseitige Einfüllöffnung (9) ein Verfüllmaterial in den Ringspalt (4) einpressbar ist,
**dadurch gekennzeichnet, dass** die Verfüllscheibe (8; 8') eine rechteckförmige Grundkontur mit insbesondere außermittig angeordneter Durchgangsöffnung (13) aufweist, wobei die Verfüllscheibe (8; 8') zur Übertragung der durch die Mutter (6) aufgebrachten Anpresskraft eine Metallkomponente aufweist, die mit einer Kunststoffkomponente zur zumindest teilweisen Ausbildung der Kanalstrukturen kombiniert ist.

2. Verfüllscheibenanordnung nach Anspruch 1,
**dadurch gekennzeichnet, dass** die Metallkomponente eine hohlzylindrische Metallhülse (11) mit Wandöffnung für den Einfüllkanal (12) ist, welche in der im Übrigen aus der Kunststoffkomponente bestehenden Verfüllscheibe (8) angeordnet ist.

3. Verfüllscheibenanordnung nach Anspruch 2,
**dadurch gekennzeichnet, dass** die hohlzylindrische Metallhülse (11) in die Kunststoffkomponente der Verfüllscheibe (8) eingepresst, eingeklebt oder umspritzt ist.

4. Verfüllscheibenanordnung nach Anspruch 1,
**dadurch gekennzeichnet, dass** die Metallkomponente der Verfüllscheibe (8') durch einen aus einem Metallmaterial bestehende Grundkörper (15) gebildet ist, welcher einen Kunststoffeinsatz (16) zur Ausbildung zumindest des von der Einfüllöffnung (9) ausgehenden Einfüllkanals (12) aufweist.

5. Verfüllscheibenanordnung nach Anspruch 4,
**dadurch gekennzeichnet, dass** der Kunststoffeinsatz (16) in den Grundkörper (15) der Verfüllscheibe (8') eingepresst und/oder eingeklebt ist.

6. Verfüllscheibenanordnung nach einem der vorstehenden Ansprüche, **dadurch gekennzeichnet, dass** die Achse des Einfüllkanals (12) für das Verfüllmaterial gegenüber der Achse der Durchgangsöffnung (13) unter einem spitzen Winkel, insbesondere unter einem Winkel zwischen 35° und 55°, verläuft.

7. Verfüllscheibenanordnung nach einem der vorstehenden Ansprüche, **dadurch gekennzeichnet, dass** das Metallmaterial als ein verzinktes und/oder rostfreies Stahlmaterial ausgeführt ist.

8. Verfüllscheibenanordnung nach einem der vorstehenden Ansprüche, **dadurch gekennzeichnet, dass** der Abstand (A) zwischen der Durchgangsöffnung (13) und einer oberen, schmalen Seitenkante (10) größer ist als die Abstände zu den übrigen Seitenkanten, um im Bereich des Abstandes (A) die oberseitige Einfüllöffnung (9) des Einfüllkanals (12) anzuordnen.

9. Verfüllscheibenanordnung nach einem der vorstehenden Ansprüche, **dadurch gekennzeichnet, dass** der Verfüllkanal (14) mehrteilig ausgeführt ist, wobei die einseitigen Enden des Verfüllkanals (14) in den Einfüllkanal (12) einmünden und die gegenüberliegenden Enden an verschiedenen Stellen in den Ringspalt (4) einmünden.

10. Verfüllscheibenanordnung nach einem der vorstehenden Ansprüche, **dadurch gekennzeichnet, dass** die Durchgangsöffnung (11) an der der Mutter (6) zugewandten Seite eine radial verlaufende Kontrollbohrung (17) zur optischen Anzeige des Füllstandes des Verfüllmaterials aufweist.

11. Verfüllscheibenanordnung nach Anspruch 10,
**dadurch gekennzeichnet, dass** die Kontrollbohrung (17) an einer dem plattenförmigen Teil (19) des Anbauteils (5) zugewandten Seite insbesondere dem Einfüllkanal (12) gegenüberliegend angeordnet ist.

12. Verfüllscheibenanordnung nach einem der vorstehenden Ansprüche, **dadurch gekennzeichnet, dass** auf einer der Mutter (6) zugewandten Seite der Verfüllscheibe (8, 8') eine Kugelscheibe (20) angeordnet ist, die an einer der Mutter (6) abgewandten Seite mit einer konischen oder sphärischen Oberfläche (21) ausgeführt ist, die zum Zusammenwirken mit einer korrespondierenden konischen oder sphärischen Fase (18) der Verfüllscheibe (8, 8') zur Zentrierung der Verfüllscheibe (8, 8') gegenüber der Achse des Ankers (1) ausgeführt ist.

13. Verfüllscheibenanordnung nach Anspruch 12,
**dadurch gekennzeichnet, dass** eine Kontrollbohrung (17') zur optischen Anzeige des Füllstandes des Verfüllmaterials im Bereich der konischen oder sphärischen Fase (18) angeordnet ist
